# EUROPÄISCHE PATENTSCHRIFT

(11) **EP 2 548 681 B1**
(45) Veröffentlichungstag und Bekanntmachung des Hinweises auf die Patenterteilung: **05.04.2017**
(21) Anmeldenummer: 11174513.9
(22) Anmeldetag: 19.07.2011
(51) Int. Cl.: B23B 31/28, B23Q 17/00

(54) **Spanneinrichtung für Werkzeugmaschinen**
Clamping device for machine tools
Dispositif de serrage pour machines-outils

(43) Veröffentlichungstag der Anmeldung: 23.01.2013
(73) Patentinhaber: Hiestand, Karl, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A2- 1 114 685
- DE-A1-102009 044 167
- GB-A- 2 194 615
- US-A- 4 573 379

## Beschreibung

Die Erfindung bezieht sich auf eine Spanneinrichtung, insbesondere für Werkzeugmaschine, die beispielsweise mit einem Kraftspannfutter zur Halterung eines Werkstückes versehen und dessen Spannbaken mittels der Spanneinrichtung über eine axial verstellbare Zugstange betätigbar sind, wobei die Spanneinrichtung einen umschaltbaren elektrischen Servomotor zum Auslösen von Spannbewegungen, einen Bewegungswandler zur Umsetzung der Verstellbewegungen der Rotorwelle des Servomotors in die zur Betätigung der Spannbacken erforderlichen axialen Verstellbewegungen der Zugstange sowie einen Kraftspeicher zur Aufrechterhaltung der Spannkraft aufweist, der aus vorgespannten Federpaketen, die an einer Spindelmutter des Bewegungswandlers abgestützt sind, gebildet ist.

Eine Vorrichtung dieser Art zur Einspannung eines Werkstückes ist durch die DE 10 2009 044 167 A1 bekannt. Bei dieser Ausgestaltung ist die Spindelmutter zwischen zwei als Schraubendruckfedern ausgebildete Federpakete eingebettet, und der Zugstange und der Spindelmutter ist hierbei jeweils ein Sensor zur Erfassung deren axialer Positionen zugeordnet. Das Auftreten einer geringen axialen Kraft in Form des Anlegens der Spannbacken an das zu bearbeitende Werkstück wird mittels des ersten Sensors erfasst. Die fortgesetzte Verstellung der Spindelmutter entgegen der Kraft einer der beiden Federpakete wird des Weiteren mittels des zweiten Sensors festgestellt, und eine dadurch gegebene Geberdifferenz zwischen den beiden Sensoren dient zur Ermittlung der Spannkraft. Die Wegdifferenz zwischen dem ersten Sensor und dem zweiten Sensor wird somit von den beiden Sensoren ständig gemessen und mit Hilfe einer aufwändigen Steuerung für die Berechnung der Spannkraft genutzt.

Die Spindelmutter ist bei dieser Spanneinrichtungsomit undefiniert zwischen zwei in verschiebbaren Buchsen eingesetzte Federpakete eingespannt, deren Federcharakteristiken nicht gleich sein können. Die Geberdifferenz, die von den beiden Sensoren ermittelt wird, ist demnach mit erheblichen Fehlern belastet, zumal die Federkräfte nur maximal 50 % der jeweiligen Spannkraft aufbringen können und durch unvermeidbare Reibungskräfte weitere Ungenauigkeiten in Kauf zu nehmen sind. Trotz einer sehr aufwändigen Bauart der Spanneinrichtung und vor allem der Steuerung sind Unwägbarkeiten nicht zu vermeiden und auszugleichen, so dass eine exakte wegabhängige Messung der Spannkraft nicht möglich ist.

Aufgabe der Erfindung ist es daher, eine Spanneinrichtung der vorgenannten Gattung in der Weise auszugestalten, dass eine genaue Messung der Spannkraft in jeder Betriebsstellung der Spanneinrichtung auf einfache Weise und mit nur einem Wegsonsor und ohne aufwändige Steuerungen möglich ist. Der dazu erforderliche Bauaufwand soll gering gehalten werden, vor allem soll stets eine einstellbare Vorspannung der Federpakete und der Verspannung der axialen Lager unabhängig voneinander problemlos vorzunehmen sein und die gewählten Vorspannungen sollen stets konstant aufrechterhalten werden. Eine Spannkraftmessung soll in einer oder beiden Verstellrichtungen der Zugstange möglich sein, auch soll ein vielseitiger Einsatzbereich der Spanneinrichtung als umlaufende oder stationäre Baugruppe bei stets hoher Betriebssicherheit und langer Lebensdauer gewährleistet sein.

Gemäß der Erfindung wird dies mit einer Spanneinrichtung der eingangs genannten Art dadurch erreicht, dass der Bewegungswandler und der Kraftspeicher in einem gesonderten rohrförmig ausgebildeten Mantelstück als Funktionseinheit integriert sind, das in einem Gehäuse der Spanneinrichtung eingesetzt und zweiteilig gestaltet ist und dessen Teilstücke in Achsrichtung der Zugstange in Einbaulage fest miteinander verbunden sind, dass zwischen den beiden Teilstücken des Mantelstückes die Spindelmutter des Bewegungswandlers mittels eines von dieser nach außen abstehenden Ansatzes drehbar abgestützt ist, dass die Federpakete des Kraftspeichers in einem oder in beiden Teilstücken des Mantelstückes angeordnet und jeweils ein-oder beidseitig zwischen einem von dem Mantelstück nach innen ragenden Anschlagring und an dem Mantelstück gehaltener kreisringförmig ausgebildetem Deckel eingespannt sind und dass das Mantelstück durch die Zugstange über den Bewegungswandler begrenzt axial verschiebbar in dem Gehäuse der Spanneinrichtung gelagert ist.

Erfindungsgemäß ist es hierbei, zur Bestimmung der jeweiligen Spannkraft, den Verstellweg des Mantelstückes oder der Spindelmutter des Bewegungswandlers mittels eines Wegsensors zu messen und auszuwerten.

Zweckmäßig ist es angebracht, die in dem Mantelstück eingesetzten Deckel jeweils mittels eines Bajonettverschlusses entgegen der Kraft der Federpakete abzustützen und in deren Richtung begrenzt verschiebbar zu lagern, wobei die Vorspannkraft der Federpakete des Kraftspeichers mit Hilfe der Bajonettverschlüsse auf einen vorgegebenen Wert konstant eingestellt werden kann und der den Bajonettverschlüssen zugeordnete Freiraum zur axialen Verschiebung der Deckel dem Federweg der Federpakte von deren vorgegebener Vorspannung bis zur Höchstspannkraft entsprechen sollte.

Des Weiteren ist der Gesamtfederweg der Federpakete derart zu bemessen, dass dieser dem zu deren Vorspannung erforderlichen Federweg sowie der bei deren Verspannung zu überwindenden Wegstrecke, die dem Messweg eines mit dem Mantelstück und der Spindelmutter verbundenen Schaltringes entspricht, zusammengesetzt ist.

Die beiden Teilstückes des Mantelstückes können miteinander verschraubt oder verpresst und zum Beispiel durch Bolzen gesichert werden.

Angebracht ist es auch, die axiale Länge der Funktionseinheit um eine wählbare Wegstrecke kürzer zu bemessen als den Abstand zwischen den an dem diese aufnehmenden Gehäuse vorgesehenen Anschlagflächen.

Zwischen den von dem Mantelstück abstehenden Anschlagringen und dem Ansatz der Spindelmutter sollte des Weiteren jeweils mindestens ein Axialwälzlager angeordnet sein, deren Vorspannung mittels der miteinander verbindbaren Teilstückes des Mantelstückes auf einen konstanten Wert einstellbar ist.

Angezeigt ist es ferner, das Mantelstück verdrehfest in dem Gehäuse der Spanneirichtung zu halten und in dem Gehäuse axial verschiebbar zu führen.

Die in das Mantelstück eingesetzten Federpakete des Kraftspeichers können jeweils durch eine oder mehrere Tellerfedern gebildet werden, die einstellbar vorgespannt zwischen den Deckeln und dem von dem Mantelstück abstehenden Anschlagringen eingespannt sind. Selbstverständlich ist es aber auch möglich, die Federpakete durch andersartige Federn zu bilden.

Zur Messung des Verstellweges des Mantelstückes oder der Spindelmutter des Bewegungswandlers können diese jeweils mit einem Schaltring zusammenwickeln, dessen axiale Verstellbewegungen mittels des Wegsensors erfassbar und auswertbar sind, wobei bei einer Messung der Lageänderung der Spindelmutter des Bewegungswandlers diese mit einem axial verschiebbar in dem Gehäuse der Spanneinrichtung gehaltenes Zwischenglied gekoppelt sein sollte, das mit dem Schaltring verbunden ist. Zur Messung des Verstellweges des Mantelstückes kann ferner in dessen Außenmantelfläche ein Permanentmagnet oder ein magnetisierbarer Schaltring eingesetzt sein, der mit einem ortsfest angeordneten Wegsensor unmittelbar zusammenwirkt.

Dem Servomotor sollte des Weiteren ein Drehgeber zugeordnet sein, mittels dem die jeweilige Betriebsstellung des Servomotors bzw. der Zugstange erfassbar und verwertbar ist.

Der Bewegungswandler kann in einfache Weise als Planetenrollgewinde ausgebildet sein und aus mehreren in der Spindelmutter als Rollen gestaltete drehbar gelagerte Wälzkörpern bestehen, die in ein in die Zugstange eingearbeitetes Gewinde eingreifen, wobei die durch den Servomotor antreibbare Spindelmutter das radial äußere oder innere Bauteil des Bewegungswandler bilden kann.

Nach einer Ausführungsvarianten kann die Spindelmutter in Achsrichtung unmittelbar an der Zugstange abgestützt sein. In diesem Fall ist es möglich, die Spindelmutter über ein Trapezgewinde mit einem Stellglied als Teil des Mantelstückes zu verbinden, das mit dem Wegsensor zusammenwirkt.

Bei dieser Ausgestaltung sollte der Spindelmutter ein Planetenradgetriebe, vorzugsweise ein Differential-Planetenradgetriebe, vorgeschaltet sein, wobei das Stellglied und die Spindelmutter jeweils über unterschiedliche Zähnezahlen aufweisende Sonnenräder mit denen durch den Servormotor antreibbaren Planetenrädern trieblich verbunden sind.

Des Weiteren ist es zur Erhöhung der Betriebssicherheit vorteilhaft, in den Antriebsstrang der Spanneinrichtung zwischen dem Servomotor und dem Bewegungswandler eine gesteuert verstellbare Schiebemuffe als Formschlusskupplung einzusetzen, mittels der in Spannstellung der Spanneinrichtung der Bewegungswandler von dem Servormotor entkoppelbar und der Bewegungswandler mit dem Gehäuse der Spanneinrichtung vzw. über synchronisierbare Zahnkränze fest verbindbar ist.

Das das Mantelstück aufnehmende Gehäuse und/oder das Mantelstück sollten flüssigkeitsdicht verschlossen und mit einem Schmiermittel befüllbar sein. Auch sollte das Gehäuse der Spanneinrichtung bei umlaufender Verwendung rotationssymmetrisch und bei stationärer Anordnung mehreckig und die Spanneinrichtung sollte ein-oder beidseitig wirkend ausgebildet sein.

Nach einer Weiterbildung ist vorgesehen, der Zugstange einen Endschalter zuzuordnen, der zum Beispiel durch einen unmittelbar an der Zugstange angebrachten Schaltring betätigt werden kann. Auf diese Weise ist es möglich, den Öffnungsweg des Kraftspannfutters zu begrenzen, um zu vermeiden, dass die Spannbacken zu weit geöffnet werden und Schmutz in das Kraftspannfutter eindringen kann.

Wird eine Spanneinrichtung gemäß der Erfindung ausgebildet, so ist es möglich, mit nur einer Messstelle die in dem Kraftspannfutter herrschende Spannkraft in Abhängigkeit von dem Verstellweg der Zugstange äußerst exakt zu bestimmen, ohne dass es dazu ungenauer Differenzmessungen und einer aufwändigen Steuerung bedarf. Werden nämlich der Bewegungswandler und der Kraftspeicher gemeinsam in einem Mantelstück eingesetzt, so dass diese als Funktionseinheit wirksam sind, so ist es möglich, den Verstellweg der Zugstange beim Aufbau der Spannkraft über die Funktionseinheit nach außen zu übertragen. Der dabei auftretende Verstellweg des jeweils gespannten Federpaketes des Kraftspeichers ergibt das Maß der auf das Werkstück einwirkenden Spannkraft.

Dabei ist von besonderem Vorteil, dass die Verspannung der die Spindelmutter abstützenden Axiallager und auch die Vorspannung der Federpakete stets konstant bleiben. Da das Mantelstück zweiteilig ausgebildet ist und die beiden Teilstücke nach Einstellung der Vorspannung der Axiallager in ihrer Endstellung fixiert sind, ist in jedem Betriebszustand der Funktionseinheit die gleiche Vorspannung sichergestellt. Und durch die mittels Bajonettverschlüssen abgestützten Deckel ist gewährleistet, dass die Vorspannung der Federpakete des Kraftspeichers ebenfalls konstant bleibt, diese aber, da die Deckel bei Anlage des Mantelstückes an Anschlagflächen in Richtung der Federpakte verschoben werden, die im Kraftspannfutter erforderliche Spannkraft aufgebaut wird. Und die Wegstrecken, um die die Federpakete bei Spannvorgängen jeweils zusammengedrückt werden, entsprechen etwa linear den aufgebauten, auf das Werkstück einwirkenden Spannkräften und können mit Hilfe eines Wegsensors abgefragt werden.

Die in dieser Weise ausgebildete Spanneinrichtung ermöglicht es somit, auf einfache Weise die in dem der Spanneinrichtung zugeordneten Kraftspannfutter jeweils gegebene Spannkraft mit nur einem Wegsensor äußerst exakt zu ermitteln und ohne Steuereinrichtung auszuwerten. Außerdem ist die Spanneinrichtung vielseitig als stationäre oder rotorisch angetriebene Baueinheit einsetzbar, und da der Innenraum der Funktionseinheit gedichtet ist, über einen langen Zeitraum bei hoher Betriebssicherheit störungsfrei verwendbar. Es ist somit eine Spanneinrichtung geschaffen, die nicht nur relativ einfach in ihrem konstruktiven Aufbau ist und dadurch auch noch wirtschaftlich hergestellt werden kann, sondern bei der die aufgebaute Spannkraft zum Beispiel durch ein selbsthemmendes Differentialplanetengetriebe selbsttätig aufrechterhalten bleibt. Außerdem ist zum Betrieb der Spanneinrichtung ein geringer Energieaufwand erforderlich, bei an dem Gehäuse abgestützter Funktionseinheit kann der Servomotor sogar außer Betrieb genommen werden.

In der Zeichnung sind ein Ausführungsbeispiel einer gemäß der Erfindung ausgebildeten Spanneinrichtung sowie Abwandlungen dargestellt und nachfolgend im Einzelnen erläutert. Hierbei zeigt:
- Figur 1: die Spanneinrichtung in einem Axialschnitt, während eines Arbeitsvorganges,
- Figur 2: die Spanneinrichtung nach Figur 1, in einem Halbschnitt und vergrößerter Wiedergabe und Neutralstellung,
- Figur 3: die Spanneinrichtung nach Figur 2, in einem Halbschnitt und schematischen Darstellung,
- Figur 4: die Spanneinrichtung nach Figur 1, in abgewandelter Ausgestaltung und mit zusätzlichen Aggregaten ,
- Figur 5: die Spanneinrichtung nach Figur 1,in einseitig wirkender Ausführungsform,
- Figur 6: die Spanneinrichtung nach Figur 5, in abgewandelter Ausgestaltung, und
- Figur 7: eine weitere Ausführungsform der Spanneinrichtung nach Figur 5.

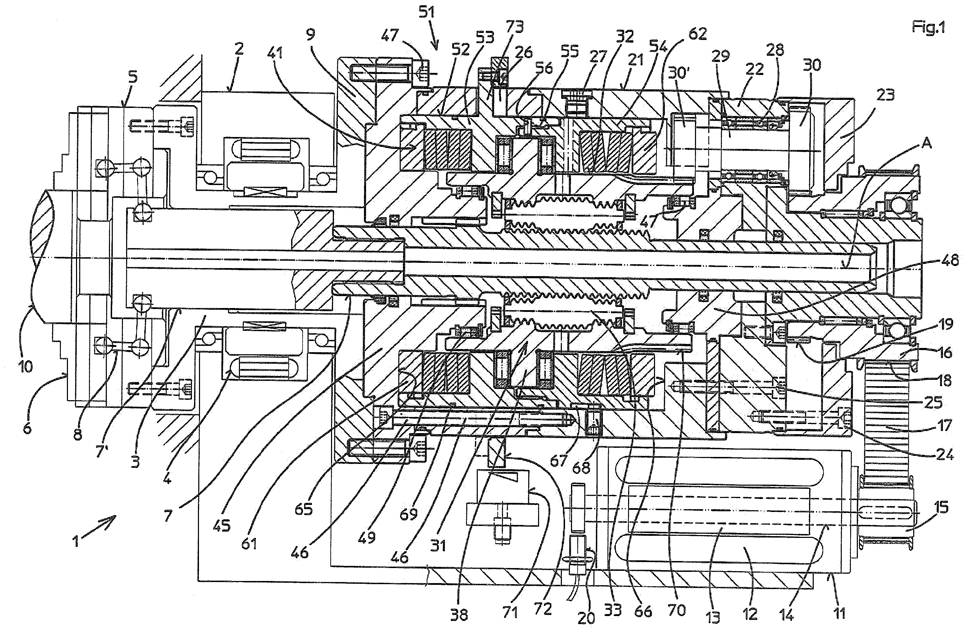

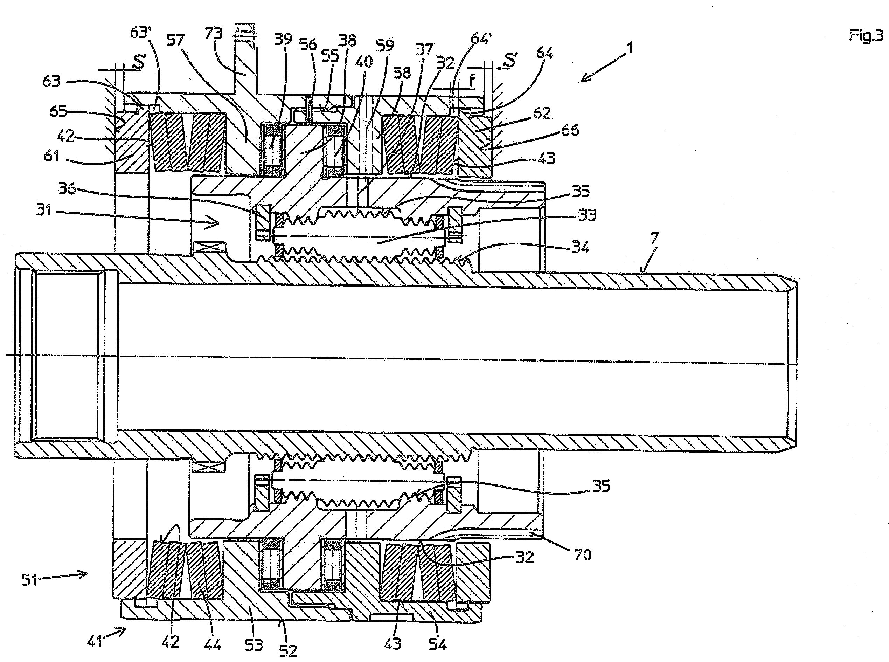

Die in den Figuren 1 bis 3 dargestellte und mit 1 bezeichnete Spanneinrichtung dient zur Betätigung eines auf einer Werkzeugmaschine 2 angeordneten Kraftspannfutters 5, mittels dessen radial vestellbarer Spannbacken 6 ein zu bearbeitendes Werkstück 10 in dem Kraftspannfutter 5 einzuspannen ist. Die Spannbacken 6 des Kraftspannfutters 5 sind hierbei über Umlenkhebel 8 durch eine axial verstellbare, zweiteilige Zugstange 7, 7' betätigbar, die mit einem umschaltbaren elektrischen Servomotor 11 über einen Bewegungswandler 31 in Triebverbindung steht. Mittels des Bewegungswandlers 31 werden die rotatorische Verstellbewegungen des Servomotors 11 in axiale Zustellbewegungen der Zugstange 7, 7' umgewandelt.

Der Servomotor 11 besteht aus einem achsparallel zur Längsachse A der Spanneinrichtung 1 ortsfest angeordneten Stator 12 und einem Rotor 13, mit dessen Rotorwelle 14 ein Ritzel 15 drehfest verbunden ist, über das ein Zahnriemen 17 geführt ist, der mit einem der Spanneinrichtung 1 zugeordneten Antriebsrad 16 zusammenwirkt. Der Servomotor 11 kann aber auch senkrecht zur Längsachse A der Spanneinrichtung angeordnet werden und zum Beispiel über Kegelräder mit dem Antriebsrad 16 trieblich verbunden sein.

Die Spanneinrichtung 1 weist ein Gehäuse 21 auf, in dem der Bewegungswandler 31 und ein Kraftspeicher 41 untergebracht sind. Auf der der Werkzeugmaschine 2 zugekehrten Seite ist das Gehäuse 21 durch einen Verschlussdeckel 45 verschlossen, der mittels Schrauben 46 an dem Gehäuse 21 und mittels weiterer Schrauben 47 an einem an der Maschinenspindel 3, die auch einen Antriebsmotor 4 der Werkzeugmaschine 2 trägt, an geformten Flansch 9 befestigt ist. Auf der gegenüberliegenden Seite ist mit dem Gehäuse 21 ein Zwischenstück 22 und ebenfalls ein Abschlussdeckel 23 verbunden, die durch Schrauben 24 miteinander sowie Schrauben 25 mit dem Gehäuse 21 verbunden sind.

In dem Zwischenstück 22 sind in Bohrungen 28 mehrere Wellen 29 drehbar gelagert, die an ihren Enden Zahnräder 30 und 30' tragen. Die Zahnräder 30 greifen hierbei in eine an dem Antriebsrad 16 angearbeitete Verzahnung 19 ein, die Zahnräder 30' dagegen in eine an der Spindelmutter 32 des Bewegungswandlers 31 vorgesehene Verzahnung 70, so dass auf diese Weise die Triebverbindung zwischen dem Servomotor 11 und dem Bewegungswandler 31 gegeben ist.

Der Bewegungswandler 31 ist als Planetenrollgetriebe ausgebildet und besteht bei der in Figur 1 gezeigten Ausgestaltung aus einer mittels Wälzlager 49 drehbar auf dem Abschlussdeckel 45 und einer Lagerscheibe 48 abgestützten Spindelmutter 32 sowie einer größeren Anzahl als Rollen ausgebildeter drehbar gelagerter Wälzkörper 33, die zwischen Sprengringen 36 gehalten sind. Die Spindelmutter 32 wie auch die Wälzkörper 33 sind jeweils mit Rillen 35 versehen. Dagegen ist in die Zugstange 7 ein Gewinde 34 eingearbeitet, so dass bei durch den Servomotor 11 rotierend angetriebener Spindelmutter 32 die Wälzkörper 33 umlaufend und sich in dem Gewinde 34 der Zugstange 7 abstützen. Auf diese Weise wird die Rotationsbewegung der Spindelmutter 32 in eine Axialbewegung umgewandelt und die Zugstange 7 wird je nach Drehrichtung der Spindelmutter 32 nach rechts oder links verschoben und die Spannbacken 6 des Kraftspannfutters 5 werden in entsprechender Weise verstellt.

Ein auf die Zugstange 7, 7' einwirkender Kraftspeicher 41 ist, um eine Verspannung in beiden Verstellrichtungen der Zugstange 7, 7' zu ermöglichen, aus zwei Federpakten 42 und 43 gebildet, die jeweils aus Tellerfedern 44 bestehen und einander gegenüberliegend in einem rohrförmig ausgestalteten Mantelstück 52 eingesetzt sind. Durch die Anordnung des Kraftspeichers 41 und des Bewegungswandler 31 in dem Mantelstück 52 ist somit Funktionseinheit 51 geschaffen, die durch den Bewegungswandler 31 in Achsrichtung verstellbar ist, und zwar in Abhängigkeit von der in dem Kraftspannfutter 5 jeweils herrschenden Spannkraft, so dass über die Stellung der Funktionseinheit 51 die jeweilige auf das Werkstück 10 einwirkende Spannkraft ermittelbar ist.

Die Federpakete 42 und 43 sind vorgespannt, aber begrenzt axial verschiebbar in dem Mantelstück 52 angeordnet. Dazu dienen Deckel 61 und 62, die jeweils mittels eines Bajonettverschlusses 63 bzw. 64 an den Enden des Mantelstückes 52 abgestützt sind. Den Bajonettschlüssen 63 und 64 sind sich in Richtung der Federpakete 42 und 43 erstreckende Freiräume 63' bzw. 64' zugeordnet, so dass die Deckel 63 oder 64, wie dies in Figur 1 in der linken Hälfte dargestellt ist, bei Anlage der Deckel 63 oder 64 an dem Abschlussdeckel 45 bzw. dem Gehäuse 21 vorgesehenen Anschlagflächen 65 bzw. 66 nach innen verschoben werden und somit die Federpakete 42 bzw. 43 zusammengepresst werden.

Das Mantelstück 52 ist, um dies zu ermöglichen, mit nach innen abstehenden Anschlagringen 57 und 58 versehen, zwischen denen und den Deckeln 61 und 62 die Federpakete 42 bzw. 43 eingesetzt und vorgespannt sind. Außerdem besteht das Mantelstück 52 aus zwei Teilstücken 53 und 54, die über ein Gewinde 55 miteinander verbunden sind.

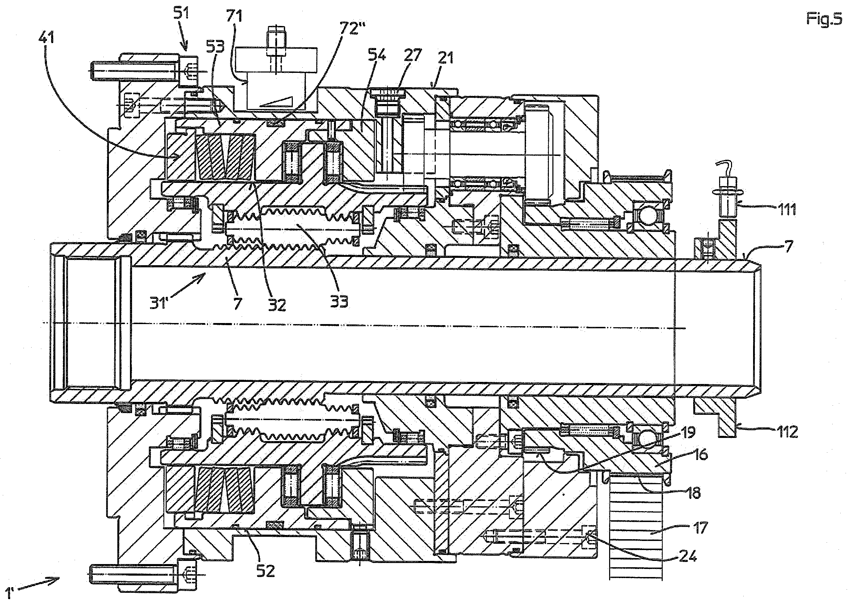

Zwischen einem von der Spindelmutter 32 des Bewegungswandlers 31 nach außen abstehenden Ansatzstückes 38 und den Anschlagringen 57 und 58 sind Axialwälzlager 39 und 40 eingesetzt, mittels denen somit die Spindelmutter 32 drehbar gelagert ist. Um die Vorspannung der Axialwälzlager 39 und 40 auf einen vorgegebenen Wert einstellen zu können, sind die beiden Teilstücke 53 und 54 des Mantelstückes 52 in entsprechender Weise zu verschrauben. Damit die eingestellte Vorspannung aufrechterhalten bleibt, werden die beiden Teilstücke 53 und 54 im Bereich des Gewindes 54 durch einen eingesetzten Bolzen 56 gesichert. Gemäß Figur 5 können die beiden Teilstücke 53 und 54 aber auch durch Verpressen miteinander verbunden und gegebenenfalls durch Bolzen gesichert werden.

Die Funktionseinheit 51 ist mittels eines Stiftes 68, der in eine in die Außenmantelfläche des Mantelstückes 52 eingearbeitete Längsnut 67 eingreift, verdrehfest mit dem Mantelstück 52 verbunden, aber axial begrenzt verschiebbar zwischen den Anschlagflächen 65 und 66 in diesem gelagert. Außerdem ist der Innenraum der Funktionseinheit 51 mit Hilfe von mehreren Dichtungen 69 flüssigkeitsdicht abgedichtet und über einen in das Mantelstück 52 eingeschraubten Schmiernippel 27 sowie diversen Bohrungen 37 und 59 kann der Innenraum des Mantelstückes 52 mit Schmiermittel gefüllt werden.

Bei einem Spannvorgang, wie dies in Figur 1 dargestellt ist, wird der mit einem Drehgeber 20 zur Ermittlung der jeweiligen Betriebsstellung ausgestattete Servomotor 11 eingeschaltet, und über den Zahnriemen 17 werden das Antriebsrad 16 sowie die Zahnräder 30 und 30'die Spindelmutter 21 des Bewegungswandlers 21 in Drehung versetzt. Dadurch wird über die Wälzkörper 33 je nach Drehrichtung des Servomotors 11 die Zugstange 7, 7' axial nach rechts oder links verschoben, so dass die Spannbacken 6 des Kraftspannfutters 5 gegen das Werkstück 6 gepresst werden oder dieses freigegeben wird.

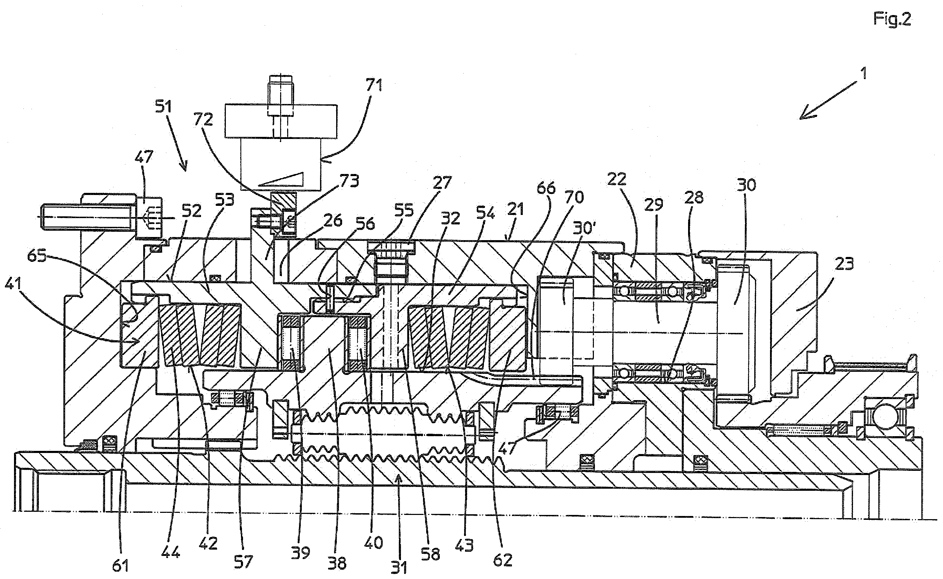

In der in Figur 2 gewählten Darstellung ist das Werkstück 10 eingespannt. Die Funktionseinheit 51 wurde während des Spannvorganges mittels des Bewegungswandlers 31, da dessen Wälzkörper 33 in das an der Zugstange 7 vorgesehene Gewinde 34 eingreifen und der von der Spindelmutter 32 abstehende Ansatz 38 zwischen den Axialwälzlagern 39 und 40 eingespannt ist, nach links verschoben. Der Deckel 61 wird dadurch gegen die Anschlagfläche 65 gepresst, so dass das Tellerfederpaket 42 etwa auf Blocklänge zusammengedrückt wird. Diese Betriebsstellung des Federpaketes 42 entspricht der maximalen Spannkraft in dem Kraftspannfutter 5. Die eingestellte Vorspannung des gegenüberliegend angeordneten Federpakets 43 wird dabei nicht verändert, da diese durch den mittels des Bajonettverschlusses 64 gehaltenen Deckel 62 aufrechterhalten bleibt. Auch die Verspannung der beiden Axialwälzlager 39 und 40 bleibt konstant. Die Lage der beiden fest miteinander verbundenen und durch den Bolzen 56 gesicherten Teilstücke 53 und 54 des Mantelstückes wird nämlich nicht verändert.

Mit Hilfe des Verstellweges des Federpaketes 42 - bei umgekehrter Spannrichtung selbstverständlich auch über den Verstellweg des Federpaketes 43 - ist die in dem Kraftspannfutter 5 jeweils herrschende Spannkraft ohne Schwierigkeiten zu bestimmen. Dazu ist bei der Ausgestaltung nach Figur 1 ein Schaltring 72 vorgesehen, der an einem von dem Teilstück 53 des Mantelstückes 52 abstehenden Ansatz 73 angebracht ist und mit einem ortsfest angeordneten Wegsensor 71 zusammenwirkt. Der Ansatz 73 ist durch einen in das Gehäuse 21 eingearbeiteten Schlitz 26 nach außen geführt. Gemäß 5 kann der Schaltring 72" aber auch aus einem in die Außenmantelfläche des Gehäuses 21 eingesetzten Permanentmagneten bestehen, der auf den Wegsensor 71 einwirkt.

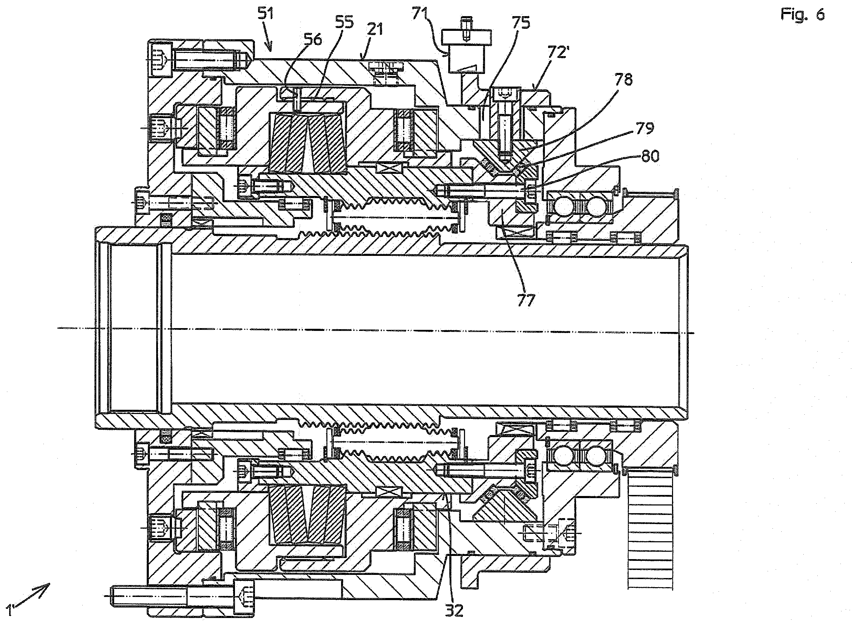

Bei der Spanneinrichtung 1' Figur 6 ist es möglich, die Verstellbewegungen der Spindelmutter 32 zu erfassen und in Abhängigkeit von deren axialen Stellung die Spannkraft zu bestimmen. Dazu ist an der Spindelmutter 32 mittels Schrauben 80 ein Zwischenstück 77 angebracht, in dem über Lager 79 ein weiteres Zwischenstück 78 abgestützt ist. Die axialen Verstellbewegungen der Spindelmutter 32 werden somit auf einen mit dem Zwischenstück 78 fest verbundenen Schaltring 72', der in einem Schlitz 75 des Gehäuses 21 verschiebbar gehalten ist, übertragen und sind als Maß für die jeweils gegebene Spannkraft auswertbar.

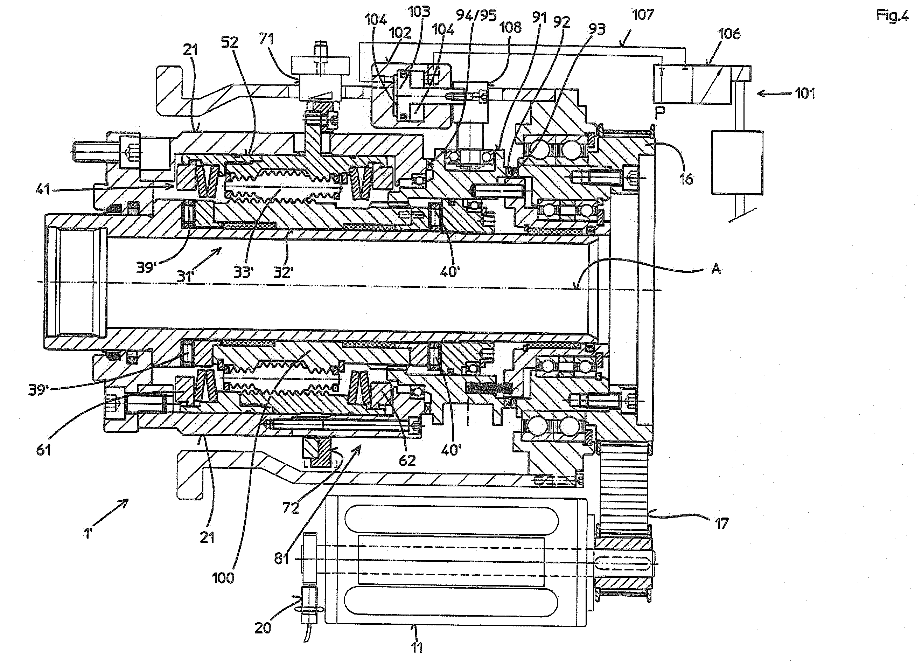

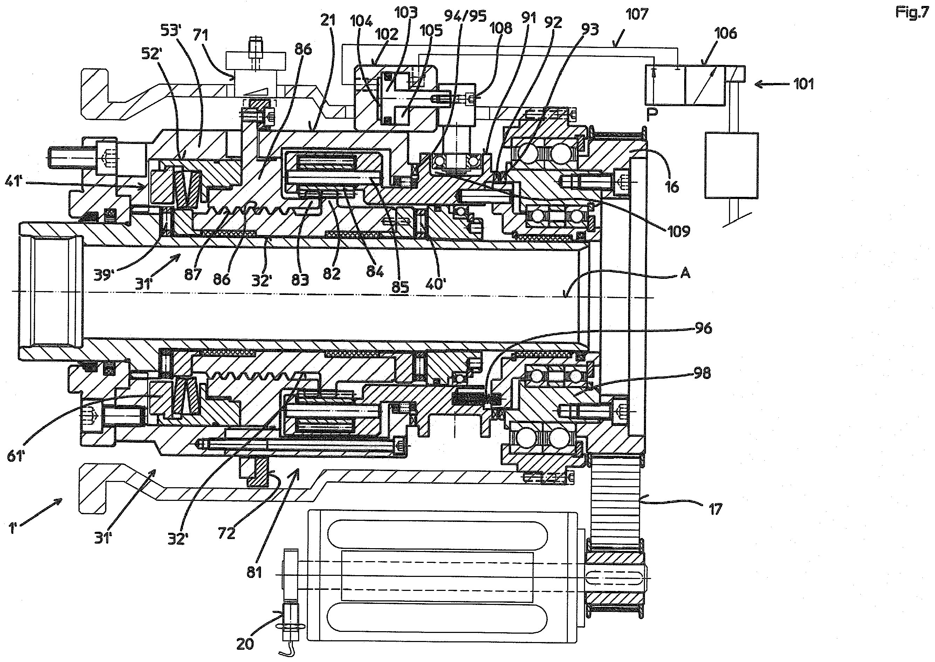

Bei den Ausführungsvarianten nach den Figuren 4 und 7 ist der Spanneinrichtung 1' zur Erhöhung der Betriebssicherheit in deren Antriebsstrang eine gesteuert verstellbare Verschiebemuffe 91 als Formschlusskupplung eingesetzt, mittels der in Spannstellung der Bewegungswandler 31' von dem Servomotor 11 entkoppelbar und der Bewegungswandler 31' mit dem Gehäuse 21 fest verbindbar ist. Während eines Spannvorganges wird die Antriebsenergie von dem Antriebsrad 16 über einen an diesem angebracht Zahnkranz 93 und einem an der Schiebemuffe 91 vorgesehenen Zahnkranz 92 auf diese, die bei der Ausgestaltung nach Figur 7 über ein Planetenradgetriebe 81 mit dem Bewegungswandler 31' verbunden ist, übertragen. Mit Hilfe einer Servoeinrichtung 101 oder Druckfedern 96 wird jedoch zum Beispiel bei einem Stromausfall die Schiebemuffe 91 mit einer Verzahnung 94 in eine an dem Gehäuse 21 angearbeitete Verzahnung 95 eingeführt, so dass der Bewegungswandler 31 an dem Gehäuse 21 abgestützt und somit blockiert ist.

Die zur Betätigung der Schiebemuffe 91 vorgesehene Servoeinrichtung 101 besteht aus einem in einen Zylinder 102 eingesetzten von einem Druckmittel beidseitig beaufschlagbaren Kolben 103. Über ein Winkelstück 108, das in eine in die Schiebemuffe 91 eingearbeitete umlaufende Nut 109 eingreift, ist der Kolben 93 mit dieser trieblich verbunden.

Wird den Druckräumen 104 oder 105 der Servoeinrichtung 101 über ein Ventil 106 und Druckleitungen 107 gesteuert Druckmittel zugeführt, so wird der Kolben 103 und mit diesem das Winkelstück 108 nach rechts oder links verschoben. Von dem Winkelstück 108 wird die Schiebemuffe 101 mitgenommen, so dass diese ebenfalls nach rechts oder links bewegt wird und die an deren Stirnflächen vorgesehenen Verzahnungen 92 oder 94 wechselweise in den an dem Antriebsrad 16 angebrachten Zahnkranz 93 oder den an dem Gehäuse 22 angearbeiteten Zahnkranz 95 eingreifen.

Die Spanneinrichtung 1 nach den Figuren 1 bis 4 ist doppelseitig wirkend ausgebildet. In den Figuren 5 bis 7 ist dagegen jeweils nur eine einseitig wirkende Spanneinrichtung 1' in unterschiedlichen Ausführungsformen dargestellt. Gemäß den Figuren 4 und 7 greifen die Wälzkörper 33' des Bewegungswandlers 31', anders als bei der Spanneinrichtung 1, in ein Zwischenstück 100 ein, das mittels Wälzkörpern 39' und 40' unverschiebbar an der Zugstange 7 abgestützt ist.

Bei der Ausführungsvariante nach Figur 7 ist dem Bewegungswandler 31' das als Differential-Planetenradgetriebe ausgebildete Planetenradgetriebe 81 vorgeschaltet, dessen Planetenräder 84 jeweils auf einer Welle 85 in einem Ansatz der Schiebemuffe 91 drehbar gelagert sind. Die mit den Planetenrädern 84 zusammenwirkenden Sonnenräder 82 und 83 sind einerseits mit der Spindelmutter 32' und andererseits mit einem Stellglied 86 als Teilstück 53' des Mantelstückes 52' verbunden. Das Stellglied 86 ist hierbei über eine Schraubverbindung 86' an dem Teilstück 53' befestigt. Außerdem weisen die Sonnenräder 82 und 83 unterschiedliche Zähnezahlen auf, so dass eine große Untersetzung gegeben ist und die Verstellmutter 32' und das Stellglied 86 über kostengünstig herzustellende Trapezgewinde 87 und 88 miteinander verbunden sein können.

Der Spanneinrichtung 1' kann des Weiteren, wie dies in Figur 5 eingezeichnet ist, auch ein Endschalter 111 zugeordnet werden, mittels dem der Öffnungsweg der Spannbacken 6 des Kraftspannfutters 5 zu begrenzen ist. Dazu ist an der Zugstange 7 ein Schaltring 112 angebracht, der in einer oder beiden Verstellrichtungen der Zugstange mit dem Endschalter 111 zusammenwirkt.

## Patentansprüche

1. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7, 7') betätigbar sind, wobei die Spanneinrichtung (1) einen umschaltbaren elektrischen Servomotor (11) zum Auslösen von Spannbewegungen, einen Bewegungswandler (31) zur Umsetzung der Verstellbewegungen der Rotorwelle (14) des Servomotors (11) in die zur Betätigung der Spannbacken (6) erforderlichen axialen Verstellbewegungen der Zugstange (7, 7') sowie einen Kraftspeicher (41) zur Aufrechterhaltung der Spannkraft aufweist, der aus vorgespannten Federpaketen (42, 43), die an einer Spindelmutter (32) des Bewegungswandlers (31) abgestützt sind, gebildet ist, wobei der Bewegungswandler (31) und der Kraftspeicher (41) in einem gesonderten rohrförmig ausgebildeten Mantelstück (52) als Funktionseinheit (51) integriert sind, das in einem Gehäuse (21) der Spanneinrichtung (1) eingesetzt und zweiteilig gestaltet ist und dessen Teilstücke (53, 54) in Achsrichtung (A) der Zugstange (7, 7') in Einbaulage fest miteinander verbunden sind, wobei zwischen den beiden Teilstücken (53, 54) des Mantelstückes (52) die Spindelmutter (32) des Bewegungswandlers (31) mittels eines von dieser nach außen abstehenden Ansatzes (38) drehbar abgestützt ist, wobei die Federpakete (42, 43) des Kraftspeichers (41) in einem oder in beiden Teilstücken (53, 54) des Mantelstückes (52) angeordnet und jeweils ein- oder beidseitig zwischen einem von dem Mantelstück (52) nach innen ragenden Anschlagring (57, 58) und an dem Mantelstück (52) gehaltener, kreisringförmig ausgebildetem Deckel (61, 62) vorgespannt sind, wobei das Mantelstück (52) durch die Zugstange (7) über den Bewegungswandler (31) begrenzt axial verschiebbar in dem Gehäuse (21) der Spanneinrichtung (1) gelagert ist und wobei zur Bestimmung der jeweiligen Spannkraft der Verstellweg (S) des Mantelstückes (52) oder der Spindelmutter (32) des Bewegungswandlers (31) mittels eines Wegsensors (71) messbar und auswertbar ist.

2. Spanneinrichtung nach Anspruch 1,
**dadurch gekennzeichnet,**
**dass** die in dem Mantelstück (52) eingesetzten Deckel (61, 62) jeweils mittels eines Bajonettverschlusses (63, 64) entgegen der Kraft der Federpakete (42, 43) des Kraftspeichers (41) abgestützt und in deren Richtung begrenzt verschiebbar gelagert sind.

3. Spanneinrichtung nach Anspruch 2,
**dadurch gekennzeichnet,**
**dass** die Vorspannkraft der Federpakete (42, 43) des Kraftspeichers (41) mit Hilfe der Bajonettverschlüsse (63, 64) auf einen vorgegebenen Wert konstant einstellbar ist.

4. Spanneinrichtung nach Anspruch 2 oder 3,
**dadurch gekennzeichnet,**
**dass** der den Bajonettverschlüssen (63, 64) zugeordnete Freiraum (f) zur axialen Verschiebung der Deckel (61, 62) dem Federweg (s) der Federpakete (42, 43) von deren vorgegebenen Vorspannung bis zur Höchstspannkraft entspricht.

5. Spanneinrichtung nach einem oder mehreren der Ansprüche 2 bis 4,
**dadurch gekennzeichnet,**
**dass** der Gesamt-Federweg der Federpakete (42, 43) derart bemessen ist, dass dieser dem zu deren Vorspannung erforderlichen Federweg sowie der bei deren Verspannung zu überwindenden Wegstrecke, die dem Messweg eines mit dem Mantelstück (52) oder der Spindelmutter (32) verbundenen Schaltringes (72) entspricht, zusammengesetzt ist.

6. Spanneinrichtung nach einem oder mehreren der Ansprüche 1 bis 5,
**dadurch gekennzeichnet,**
**dass** die beiden Teilstücke (53, 54) des Mantelstückes (52) miteinander verschraubt und/oder verpresst und z.B. durch Stifte (56) gesichert sind.

7. Spanneinrichtung nach einem oder mehreren der Ansprüche 1 bis 6,
**dadurch gekennzeichnet,**
**dass** die axiale Länge der Funktionseinheit (51) um eine wählbare Wegstrecke kürzer bemessen ist als der Abstand zwischen den an dem diese aufnehmenden Gehäuse (21) vorgesehenen Anschlagflächen (65, 66).

8. Spanneinrichtung) nach einem oder mehreren der Ansprüche 1 bis 7,
**dadurch gekennzeichnet,**
**dass** zwischen den von dem Mantelstück (52) abstehenden Anschlagringen (57, 58) und dem Ansatz (38) der Spindelmutter (32) jeweils mindestens ein Axialwälzlager (39, 40) angeordnet ist, deren Vorspannung mittels der miteinander verbindbaren Teilstücke (53, 54) des Mantelstückes (52) auf einen konstanten Wert einstellbar ist.

9. Spanneinrichtung nach einem oder mehreren der Ansprüche 1 bis 8,
**dadurch gekennzeichnet,**
**dass** das Mantelstück (52) verdrehfest in dem Gehäuse (21) der Spanneinrichtung (1) gehalten und in dem Gehäuse (21) axial verschiebbar geführt ist..

10. Spanneinrichtung nach einem oder mehreren der Ansprüche 1 bis 9,
**dadurch gekennzeichnet,**
**dass** die in das Mantelstück (52) eingesetzten Federpakete (42, 43) des Kraftspeichers (41) jeweils durch eine oder mehrere Tellerfedern (44) gebildet sind, die einstellbar vorgespannt zwischen den Deckeln (61, 62) und dem von dem Mantelstück (52) abstehenden Anschlagringen (57, 58) eingespannt sind.

11. Spanneinrichtung nach einem oder mehreren der Ansprüche 1 bis 10,
**dadurch gekennzeichnet,**
**dass** zur Messung des Verstellweges des Mantelstückes (52) oder der Spindelmutter (22) des Bewegungswandlers (21) diese jeweils mit einem Schalt ring (72, 72') zusammen wirken, dessen axiale Verstellbewegungen mittels des Wegsensors (71) erfassbar und auswertbar sind.

12. Spanneinrichtung nach Anspruch 11,
**dadurch gekennzeichnet,**
**dass** bei einer Messung der Lageänderung der Spindelmutter (32) des Bewegungswandlers (31) diese mit einem axial verschiebbar in dem Gehäuse (21) der Spanneinrichtung (1) gehaltenen Zwischenglied (77) gekoppelt ist, das mit dem Schaltring (72') verbunden ist.

13. Spanneinrichtung nach Anspruch 11,
**dadurch gekennzeichnet,**
**dass** zur Messung des Verstellweges des Mantelstückes (52) in dessen Außenmantelfläche ein Permanentmagnet oder ein magnetisierbarer Schaltring (72") eingesetzt ist, der mit einem ortsfest angeordneten Wegsensor (71) unmittelbar zusammen wirkt.

14. Spanneinrichtung nach einem oder mehreren der Ansprüche 1 bis 13,
**dadurch gekennzeichnet,**
**dass** dem Servomotor (11) ein Drehgeber (20) zugeordnet ist, mittels dem die jeweilige Betriebsstellung des Servomotors (11) bzw. der Zugstange (7) erfassbar und verwertbar ist.

15. Spanneinrichtung nach einem oder mehreren der Ansprüche 1 bis 14,
**dadurch gekennzeichnet,**
**dass** der Bewegungswandler (31) als Planetenrollgewinde ausgebildet ist und aus mehreren in oder an der Spindelmutter (32) drehbar gelagerte, als Rollen gestaltete Wälzkörpern (33) besteht, die in ein in die Zugstange (7) eingearbeitetes Gewinde (34) eingreifen.

16. Spanneinrichtung nach Anspruch 15,
**dadurch gekennzeichnet,**
**dass** die durch den Servomotor (11) antreibbare Spindelmutter (32, 32') das radial äußere oder innere Bauteil des Bewegungswandlers (31, 31')bildet.

17. Spanneinrichtung nach Anspruch 15 od. 16,
**dadurch gekennzeichnet,**
**dass** die Spindelmutter (32') in Achsrichtung unmittelbar an der Zugstange (7) abgestützt ist.

18. Spanneinrichtung nach Anspruch 17,
**dadurch gekennzeichnet,**
**dass** die Spindelmutter (32') über ein Trapezgewinde (87, 88) mit einem Stellglied (86) als Teil des Mantelstückes (52') verbunden ist, das mit dem Wegsensor (71) zusammenwirkt.

19. Spanneinrichtung nach Anspruch 18,
**dadurch gekennzeichnet,**
**dass** der Spindelmutter (32') ein Planetenradgetriebe (81), vorzugsweise ein Differential-Planetenradgetriebe, vorgeschaltet ist, wobei das Stellglied (86) und die Spindelmutter (32') jeweils über unterschiedliche Zähnezahlen aufweisende Sonnenräder (82, 83) mit denen durch den Servomotor (11) antreibbaren Planetenrädern (84) trieblich verbunden sind.

20. Spanneinrichtung nach einem oder mehreren der Ansprüche 1 bis 19,
**dadurch gekennzeichnet,**
**dass** in den Antriebsstrang der Spanneinrichtung (1) zwischen dem Servomotor (11) und dem Bewegungswandler (31) eine gesteuert verstellbare Schiebemuffe (91) als Formschlusskupplung eingesetzt ist, mittels der in Spannstellung der Spanneinrichtung (1) der Bewegungswandler (31) von dem Servomotor (11) entkoppelbar und vzw. über synchronisierbare Zahnkränze (92, 93 und 94, 95) der Bewegungswandler (31) mit dem Gehäuse (21) der Spanneinrichtung (1) fest verbindbar ist.

21. Spanneinrichtung nach einem oder mehreren der Ansprüche 1 bis 20,
**dadurch gekennzeichnet,**
**dass** das das Mantelstück (52) aufnehmende Gehäuse (21) und/oder das Mantelstück (52) flüssigkeitsdicht verschlossen und mit einem Schmiermittel befüllbar sind.

22. Spanneinrichtung nach einem oder mehreren der Ansprüche 1 bis 21,
**dadurch gekennzeichnet,**
**dass** das Gehäuse (21) der Spanneinrichtung (1) bei umlaufender Verwendung rotationssymmetrisch und bei stationärer Anordnung mehreckig ausgebildet ist.

23. Spanneinrichtung nach einem oder mehreren der Ansprüche 1 bis 22,
**dadurch gekennzeichnet,**
**dass** die Spanneinrichtung (1) ein- oder beidseitig wirkend ausgebildet ist.

24. Spanneinrichtung nach einem oder mehreren der Ansprüche 1 bis 23,
**dadurch gekennzeichnet,**
**dass** zur Begrenzung des Verstellweges der Zugstange (7) dieser ein Endschalter (111) zugeordnet ist, der zum Beispiel durch einen unmittelbar an der Zugstange (7) angebrachten Schaltring (112) betätigbar ist.

## Claims

1. Clamping device (1), in particular for machine tools (2) which are provided for example with a powered clamping chuck (5) for holding a workpiece (10) and the clamping jaws (6) of which can be actuated by means of the clamping device (1) through an axially adjustable connecting rod (7, 7'), wherein the clamping device (1) has a reversible electric servo motor (11) for initiating clamping movements, a movement converter (31) for converting the adjusting movements of the rotor shaft (14) of the servo motor (11) into the axial adjusting movements of the connecting rod (7, 7') necessary to actuate the clamping jaws (6) and an energy accumulator (41) for maintaining the clamping force which is formed of pre-loaded spring assemblies (42, 43) which are supported on a spindle nut (32) of the movement converter (31), wherein the movement converter (31) and the energy accumulator (41) are integrated in a separate tubular housing piece (52) as a function unit (51) which is fitted in a housing (21) of the clamping device (1) and formed in two parts and the part elements (53, 54) of which are locked in position with one another in the axial direction (A) of the connecting rod (7, 7'), wherein the spindle nut (32) of the movement converter (31) is supported rotatably between the two part elements (53, 54) of the housing piece (52) by means of a shoulder (38) projecting outwards from this spindle nut, wherein the spring assemblies (42, 43) of the energy accumulator (41) are arranged in one or in both part elements (53, 54) of the housing piece (52) and in each case are preloaded on one or both sides between a stop ring (57, 58) extending inwards from the housing piece (52) and a circular ring-shaped cover (61, 62) held on the housing piece (52), wherein the housing piece (52) is mounted in the housing (21) of the clamping device (1) so as to be displaceable axially a limited amount by the connecting rod (7) through the movement converter (31) and wherein to determine the specific clamping force the adjustment travel (S) of the housing piece (52) or the spindle nut (32) of the movement converter (31) can be measured and evaluated by means of a travel sensor (71).

2. Clamping device according to claim 1,
**characterised in that** the covers (61, 62) fitted in the housing piece (52) are in each case supported against the force of the spring assemblies (42, 43) of the energy accumulator (41) by means of a bayonet connection (63, 64) and mounted so that they are displaceable in the direction thereof a limited amount.

3. Clamping device according to claim 2,
**characterised in that** the preloading force of the spring assemblies (42 ,43) of the energy accumulator (41) can be set to a predetermined constant value with the aid of the bayonet connections (63, 64).

4. Clamping device according to claim 2 or 3,
**characterised in that** the free space (f) assigned to the bayonet connections (63, 64) for the axial displacement of the covers (61, 62) corresponds to the spring travel (s) of the spring assemblies (42, 43) from their predetermined preloading to the maximum clamping force.

5. Clamping device according to one or more of claims 2 to 4,
**characterised in that** the total spring travel of the spring assemblies (42, 43) is such that this is composed of the spring travel required for their preloading and the distance to be travelled during the loading thereof which corresponds to the measured travel of a switching ring (72) connected with the housing piece (52) or the spindle nut (32).

6. Clamping device according to one or more of claims 1 to 5,
**characterised in that** the two part elements (53, 54) of the housing piece (52) are screwed and/or pressed together and secured by pins (56) for example.

7. Clamping device according to one or more of claims 1 to 6,
**characterised in that** the axial length of the function unit (51) is shorter by a selectable travel distance than the distance between the stop faces (65, 66) provided on the housing (21) accommodating it.

8. Clamping device according to one or more of claims 1 to 7,
**characterised in that** arranged between the stop rings (57, 58) projecting from the housing piece (52) and the shoulder (38) of the spindle nut (32) there is in each case at least one axial roller bearing (39, 40) the preloading of which can be set to a constant value by means of the part elements (53, 54) of the housing piece (52) which can be connected with one another.

9. Clamping device according to one or more of claims 1 to 8,
**characterised in that** the housing piece (52) is held in the housing (21) of the clamping device (1) so that it cannot turn and is guided in the housing (21) so that it is displaceable axially.

10. Clamping device according to one or more of claims 1 to 9,
**characterised in that** the spring assemblies (42, 43) of the energy accumulator (41) fitted in the housing piece (52) are in each case formed by one or more disk springs (44) which are clamped preloaded adjustably between the covers (61, 62) and the stop rings (57, 58) projecting from the housing piece (52).

11. Clamping device according to one or more of claims 1 to 10,
**characterised in that** to measure the adjustment travel of the housing piece (52) or the spindle nut (22) of the movement converter (21) these in each case cooperate with a switching ring (72, 72') the axial adjustment movements of which can be measured and evaluated by means of the travel sensor (71).

12. Clamping device according to claim 11,
**characterised in that** when a change in the position of the spindle nut (32) of the movement converter (31) is measured this is coupled with an intermediate element (77) which is held so as to be displaceable axially in the housing (21) of the clamping device (1) and connected with the switching ring (72').

13. Clamping device according to claim 11,
**characterised in that** to measure the adjustment travel of the housing piece (52) a permanent magnet or a magnetisable switching ring (72") is fitted in its external housing face and cooperates directly with a travel sensor (71) which is arranged in a fixed location.

14. Clamping device according to one or more of claims 1 to 13,
**characterised in that** the servo motor (11) has an associated rotation sensor (20) by means of which the specific operating position of the servo motor (11) or the connecting rod (7) can be measured and evaluated.

15. Clamping device according to one or more of claims 1 to 14,
**characterised in that** the movement converter (31) is embodied in the form of a planetary roller thread and consists of a plurality of roller elements (33) in the form of rollers which are mounted so as to be able to rotate in or on the spindle nut (32) and engage in a thread (34) formed in the connecting rod (7).

16. Clamping device according to claim 15,
**characterised in that** the spindle nut (32, 32') which can be driven by the servo motor (11) forms the radially outer or inner component of the movement converter (31, 31').

17. Clamping device according to claim 15 or 16,
**characterised in that** the spindle nut (32') is supported directly on the connecting rod (7) in the axial direction.

18. Clamping device according to claim 17,
**characterised in that** the spindle nut (32') is connected through a trapezoidal thread (87, 88) with a control element (86) as part of the housing piece (52') which cooperates with the travel sensor (71).

19. Clamping device according to claim 18,
**characterised in that** the spindle nut (32') follows a planetary gear train (81), preferably a differential planetary gear train, wherein the control element (86) and the spindle nut (32') are in each case connected operatively by means of sun gears (82, 83) having different numbers of teeth with planetary gears (84) which can be driven by the servo motor (11).

20. Clamping device according to one or more of claims 1 to 19,
**characterised in that** arranged in the drive line of the clamping device (1) between the servo motor (11) and the movement converter (31) there is a controllably adjustable sliding sleeve (91) in the form of a form-locking coupling by means of which in the clamping position of the clamping device (1) the movement converter (31) can be uncoupled from the servo motor (11) and the movement converter (31) can be locked with the housing (21) of the clamping device (1) by means of synchronizable gear rings (92, 93 and 94, 95).

21. Clamping device according to one or more of claims 1 to 20,
**characterised in that** the housing (21) receiving the housing piece (52) and/or the housing piece (52) are closed with a liquid tight seal and can be filled with a lubricant.

22. Clamping device according to one or more of claims 1 to 21,
**characterised in that** the housing (21) of the clamping device (1) is embodied in rotationally symmetrical form when revolving in use and in polygonal form when in a stationary arrangement.

23. Clamping device according to one or more of claims 1 to 22,
**characterised in that** the clamping device (1) is embodied acting on one or both sides.

24. Clamping device according to one or more of claims 1 to 23,
**characterised in that** to limit the adjustment travel of the connecting rod (7) the latter has an associated limit switch (111) which can be actuated for example by means of a switching ring (112) mounted directly on the connecting rod (7).

## Revendications

1. Dispositif de serrage (1), en particulier pour des machines-outils (2) qui sont pourvues par exemple d'un mandrin de serrage (5) qui est destiné à tenir un outil (10) et dont les mâchoires de serrage (6) sont aptes à être actionnées à l'aide du dispositif de serrage (1) par l'intermédiaire d'une barre de traction (7, 7') réglable axialement, le dispositif de serrage (1) comportant un servomoteur électrique à inversion (11) pour déclencher des mouvements de serrage, un convertisseur de mouvement (31) pour transformer les mouvements de réglage de l'arbre de rotor (14) du servomoteur (11) en mouvements de réglage axiaux de la barre de traction (7, 7') nécessaires pour l'actionnement des mâchoires de serrage (6), et un accumulateur d'énergie (41) pour maintenir la force de serrage, qui se compose de blocs-ressorts contraints (42, 43) qui sont en appui contre un écrou de broche (32) du convertisseur de mouvement (31), le convertisseur de mouvement (31) et l'accumulateur d'énergie (41) étant intégrés dans une pièce formant gaine (52) séparée, de forme tubulaire, comme unité fonctionnelle (51), qui est placée dans un carter (21) du dispositif de serrage (1) et est en deux parties, et dont les parties (53, 54), en position montée, sont reliées solidement entre elles dans le sens axial (A) de la barre de traction (7, 7'), l'écrou de broche (32) du convertisseur de mouvement (31) étant en appui en rotation entre les deux parties (53, 54) de la pièce formant gaine (52) à l'aide d'un épaulement (38) qui dépasse, vers l'extérieur, dudit écrou de broche (32), les blocs-ressorts (42, 43) de l'accumulateur d'énergie (41) étant disposés dans une partie ou dans les deux parties (53, 54) de la pièce formant gaine (52) et étant contraints chacun, d'un côté ou des deux côtés, entre une bague de butée (57, 58) qui dépasse, vers l'intérieur, de la pièce formant gaine (52), et un couvercle (61, 62) en forme de couronne circulaire qui est fixé à ladite pièce formant gaine (52), la pièce formant gaine (52) étant montée dans le carter (21) du dispositif de serrage (1) de manière à pouvoir coulisser axialement de manière limitée, grâce à la barre de traction (7) et par l'intermédiaire du convertisseur de mouvement (31), et la course de réglage (S) de la pièce formant gaine (52) ou de l'écrou de broche (32) du convertisseur de mouvement (31) étant apte à être mesurée et analysée à l'aide d'un capteur de course (71), pour définir la force de serrage.

2. Dispositif de serrage selon la revendication 1, **caractérisé en ce que** les couvercles (61, 62) placés dans la pièce formant gaine (52) sont en appui chacun à l'aide d'une fermeture à baïonnette (63, 64) à l'encontre de la force des blocs-ressorts (42, 43) de l'accumulateur d'énergie (41), et sont montés de manière à pouvoir coulisser, de manière limitée, dans le sens de ceux-ci.

3. Dispositif de serrage selon la revendication 2, **caractérisé en ce que** la force de contrainte des blocs-ressorts (42, 43) de l'accumulateur d'énergie (41) est réglable de manière constante à une valeur prédéfinie, à l'aide des fermetures à baïonnette (63, 64).

4. Dispositif de serrage selon la revendication 2 ou 3,
**caractérisé en ce que** l'espace libre (f) associé aux fermetures à baïonnette (63, 64) pour le coulissement axial des couvercles (61, 62) correspond à la course de ressort (s) des blocs-ressorts (42, 43), de leur contrainte prédéfinie jusqu'à la force de serrage maximale.

5. Dispositif de serrage selon l'une au moins des revendications 2 à 4,
**caractérisé en ce que** la course de ressort totale des blocs-ressorts (42, 43) est calculée de manière à se composer de la course de ressort nécessaire pour contraindre lesdits blocs-ressorts (42, 43), et de la distance à surmonter lors du serrage, qui correspond à la course de mesure d'une bague de manoeuvre (72) reliée à la pièce formant gaine (52) ou à l'écrou de broche (32).

6. Dispositif de serrage selon l'une au moins des revendications 1 à 5,
**caractérisé en ce que** les deux parties (53, 54) de la pièce formant gaine (52) sont reliées par vissage et/ou pression, et immobilisées par exemple par des tiges (56).

7. Dispositif de serrage selon l'une au moins des revendications 1 à 6,
**caractérisé en ce que** la longueur axiale de l'unité fonctionnelle (51) est calculée pour être plus courte, d'une distance apte à être choisie, que l'écartement entre les surfaces de butée (65, 66) prévues sur le carter (21) qui reçoit ladite unité fonctionnelle (51).

8. Dispositif de serrage selon l'une au moins des revendications 1 à 7,
**caractérisé en ce qu'**il est prévu, entre chacune des bagues de butée (57, 58) qui dépassent de la pièce formant gaine (52) et l'épaulement (38) de l'écrou de broche (32), au moins un roulement axial (39, 40) dont la contrainte est réglable, à l'aide des parties (53, 54) de la pièce formant gaine (52) aptes à être reliées entre elles, à une valeur constante.

9. Dispositif de serrage selon l'une au moins des revendications 1 à 8,
**caractérisé en ce que** la pièce formant gaine (52) est maintenue fixe en rotation dans le carter (21) du dispositif de serrage (1) et est guidée mobile axialement dans ledit carter (21).

10. Dispositif de serrage selon l'une au moins des revendications 1 à 9,
**caractérisé en ce que** les blocs-ressorts (42, 43) de l'accumulateur d'énergie (41) qui sont placés dans la pièce formant gaine (52) sont formés chacun par un ou plusieurs ressorts à disque (44) qui sont placés, en étant contraints de manière réglable, entre les couvercles (61, 62) et les bagues de butée (57, 58) qui dépassent de la pièce formant gaine (52).

11. Dispositif de serrage selon l'une au moins des revendications 1 à 10,
**caractérisé en ce que** pour mesurer la course de réglage de la pièce formant gaine (52) ou de l'écrou (22) du convertisseur de déplacement (21), ceux-ci coopèrent chacun avec une bague de manoeuvre (72, 72') dont les mouvements de réglage sont aptes à être relevés et analysés à l'aide du capteur de course (71).

12. Dispositif de serrage selon la revendication 11,
**caractérisé en ce que** lors d'une mesure du changement de position de l'écrou de broche (32) du convertisseur de mouvement (31), ledit écrou de broche (32) est couplé à un élément intermédiaire (77) qui est retenu, apte à coulisser axialement, dans le carter (21) du dispositif de serrage (1) et qui est relié à la bague de manoeuvre (72').

13. Dispositif de serrage selon la revendication 11, **caractérisé en ce que** pour mesurer la course de réglage de la pièce formant gaine (52), il est prévu, placé dans la surface de gaine extérieure, un aimant permanent ou une bague de manoeuvre magnétisable (72") qui coopère directement avec un capteur de course (71) fixe.

14. Dispositif de serrage selon l'une au moins des revendications 1 à 13,
**caractérisé en ce qu'**il est prévu, associé au servomoteur (11), un capteur de rotation (20) à l'aide duquel chaque position de fonctionnement du servomoteur (11) ou de la barre de traction (7) est apte à être relevée et exploitée.

15. Dispositif de serrage selon l'une au moins des revendications 1 à 14,
**caractérisé en ce que** le convertisseur de mouvement (31) est conçu comme un engrenage planétaire et se compose de plusieurs corps de roulement (33) qui sont montés en rotation dans ou sur l'écrou de broche (32), qui se présentent comme des rouleaux et qui s'engrènent dans un filetage (34) réalisé dans la barre de traction (7).

16. Dispositif de serrage selon la revendication 15,
**caractérisé en ce que** l'écrou de broche (32, 32') apte à être entraîné par le servomoteur (11) forme le composant radialement extérieur ou intérieur du convertisseur de mouvement (31, 31').

17. Dispositif de serrage selon la revendication 15 ou 16,
**caractérisé en ce que** l'écrou de broche (32') est directement en appui contre la barre de traction (7) dans le sens axial.

18. Dispositif de serrage selon la revendication 17,
**caractérisé en ce que** l'écrou de broche (32') est relié par l'intermédiaire d'un filetage trapézoïdal (87, 88), comme élément de la pièce formant gaine (52'), à un actionneur (86) qui coopère avec le capteur de course (71).

19. Dispositif de serrage selon la revendication 18,
**caractérisé en ce qu'**une transmission planétaire (81), de préférence une transmission planétaire différentielle, est montée en amont de l'écrou de broche (32'), l'actionneur (86) et l'écrou de broche (32') étant reliés en termes d'entraînement par l'intermédiaire de planétaires (82, 83) qui présentent des nombres de dents différents à des satellites (84) aptes à être entraînés avec ceux-ci par le servomoteur (11).

20. Dispositif de serrage selon l'une au moins des revendications 1 à 19,
**caractérisé en ce qu'**il est prévu, placé dans la transmission du dispositif de serrage (1) entre le servomoteur (11) et le convertisseur de mouvement (31), un manchon coulissant (91) à réglage commandé, sous la forme d'un accouplement par complémentarité de forme, à l'aide duquel, dans la position de serrage du dispositif de serrage (1), le convertisseur de mouvement (31) est apte à être désaccouplé du servomoteur (11) et ou le convertisseur de mouvement (31) est apte à être relié solidement au carter (31) du dispositif de serrage (1) par l'intermédiaire de couronnes dentées (92, 93 et 93, 95) aptes à être synchronisées.

21. Dispositif de serrage selon l'une au moins des revendications 1 à 20,
**caractérisé en ce que** le carter (21) qui reçoit la pièce formant gaine (52) et/ou la pièce formant gaine (52) sont fermés de manière étanche au liquide et sont aptes à être remplis avec un lubrifiant.

22. Dispositif de serrage selon l'une au moins des revendications 1 à 21,
**caractérisé en ce que** le carter (21) du dispositif de serrage (1) présente une symétrie de révolution dans le cas d'une utilisation rotative, et une forme polygonale dans le cas d'une disposition stationnaire.

23. Dispositif de serrage selon l'une au moins des revendications 1 à 22,
**caractérisé en ce que** le dispositif de serrage (1) est conçu pour agir d'un côté ou des deux côtés.

24. Dispositif de serrage selon l'une au moins des revendications 1 à 23,
**caractérisé en ce que** pour limiter la course de la barre de traction (7), il est prévu, associé à cette dernière, un commutateur de fin de course (111) qui est apte à être actionné par exemple grâce à une bague de manoeuvre (112) montée directement sur la barre de traction (7).
